# EUROPÄISCHE PATENTSCHRIFT

(11) **EP 0 348 810 B1**
(45) Veröffentlichungstag und Bekanntmachung des Hinweises auf die Patenterteilung: **16.02.1994**
(21) Anmeldenummer: 89111307.8
(22) Anmeldetag: 21.06.1989
(51) Int. Cl.: H04Q 9/14, H04B 3/46, G06F 12/06

(54) **Verfahren zur Adressierung von Prozessoreinheiten und Schaltungsanordnung zur Durchführung des Verfahrens**
Method for addressing processor units and circuit arrangement for carrying out the method
Méthode pour l'adressage d'unités de processeur et circuit pour la mise en oeuvre de la méthode

(30) Priorität: 30.06.1988 DE 3822126
(43) Veröffentlichungstag der Anmeldung: 03.01.1990
(73) Patentinhaber: SIEMENS AKTIENGESELLSCHAFT, 80333 München (DE)
(72) Erfinder: Narjes, Ferdinand, D-8000 München 70 (DE); Weimert, Günter, Dipl.-Ing., D-8000 München 71 (DE)

(56) Entgegenhaltungen:
- EP-A- 0 143 489
- EP-A- 0 166 441
- TELCOM REPORT, Nr. 10, 1987, Seiten 109-114; E. BRAUN et al.: "Überwachung und zusätzliche Dienste der Digitalübertragungssysteme für Lichtwellenleiter"

## Beschreibung

Die Erfindung bezieht sich auf ein wie im Oberbegriff des Patentanspruchs 1 angegebenes Verfahren zum Adressieren von Prozessoreinheiten.

Die Prozessoreinheiten dienen zum Austausch von Informationen über das Telegrammübertragungsnetz. Insbesondere kann eine der Prozessoreinheiten als zentrale Aufrufeinheit ausgebildet sein, die die weiteren Prozessoreinheiten mit Hilfe von Aufruftelegrammen zur Aussendung von Meldungstelegrammen an die Aufrufeinheit veranlaßt.

Derartige Verfahren sind bereits aus der DE-OS 28 23 925 bekannt. Bei den bekannten Verfahren werden die Adressen mit Hilfe von Codierschaltern eingestellt oder durch eine besondere Gestellverdrahtung festgelegt.

Aus der EP-A-0 166 441 ist bereits ein Netzwerk bekannt, bei dem an eine Zentraleinheit eine Kettenschaltung von Prozessoreinheiten angeschlossen ist. Insbesondere sind die Zentraleinheit Bestandteil eines Computersystems und die Prozessoreinheiten Bestandteil von benutzerorientierten Vorrichtungen wie z.B. einer Tastatur oder dergleichen. Die einzelnen Vorrichtungen sind über eine Vierdraht-Übertragungsleitung mit der Zentraleinheit verbunden. Zur Ankopplung an die Vierdraht-Übertragungsleitung dient jeweils ein Netzwerk-Prozessor. Bei der Konfigurierung des Systems werden den Netzwerk-Prozessoren eigene Adressen zugeteilt. Hierzu dient ein Verfahren, bei dem zunächst alle Netzwerk-Prozessoren in einen Modus überführt werden, in dem sie für die Vierdraht-Übertragungsleitung einen Schleifenschluß herstellen. Daran anschließend teilt die zentrale Vorrichtung einem Prozessor nach dem anderen jeweils eine Adresse zu. Bei der schrittweisen Adressierung der Prozessoren wird die Adresse jeweils um 1 erhöht. Voraussetzung für dieses Adressierverfahren ist, daß die Vierdraht-Datenübertragungsleitung, die die zentrale Vorrichtung und die Netzwerk-Prozessoren miteinander verbindet, ein einzelnes Liniennetz bildet.

Ein Verfahren zur In-Betrieb-Überwachung einer Nachrichtenübertragungseinrichtung, bei der Nutzsignale über eine elektrooptische Übertragungsstrecke und Telemetriesignale über einen Hilfskanal übertragen werden, ist bereits aus Ewald Braun und Erhard Steiner: "Überwachung und zusätzliche Dienste der Digitalübertragungssysteme für Lichtwellenleiter" telcom report 10 (1987) Special "Multiplex- und Leitungseinrichtungen", Seite 109 bis 114 bekannt. Das bekannte Verfahren verwendet adressenfreie Telemetrietelegramme, so daß die in den Leitungsendgeräten und Zwischenregeneratoren eines Übertragungsabschnitts vorgesehenen Prozessoreinheiten nicht adressiert zu werden brauchen. Das Verfahren läßt sich jedoch nicht ohne weiteres in Nachrichtenübertragungseinrichtungen anwenden, die eine Stern- bzw. Baumstruktur haben.

Andererseits kann bei einem Nachrichtenübertragungsnetz mit Stern- bzw. Baumstruktur vorgesehen sein, daß im Telegrammübertragungsnetz der zugehörigen Telemetrieeinrichtung Prozessoreinheiten durch eine Ortungseinheit in zyklischer Folge adressengesteuert aufgerufen werden. Dabei kann es von Vorteil sein, dem Telegrammübertragungsnetz der Telemetrieeinrichtung eine Struktur zu geben, die der Struktur des als Nutzsignalübertragungsnetz dienenden Nachrichtenübertragungsnetzes entspricht. Dies ist insbesondere dann der Fall, wenn als Telegrammübertragungskanäle Nachrichtenübertragungskanäle, z.B. Dienstkanäle des Nachrichtenübertragungsnetzes Verwendung finden oder für die Telegrammübertragung Leitungen vorgesehen sind, die zusammen mit den Leitungen des Nachrichtenübertragungsnetzes verlegt sind.

Dabei ergibt sich jedoch das Problem, daß die Prozessoreinheiten jeweils auf eine bestimmte Adresse eingestellt werden müssen und dies nicht nur bei Inbetriebnahme der Telemetrieeinrichtung, sondern auch bei jeder Änderung der Nachrichtenübertragungseinrichtung, die eine neue Adressierung von Prozessoreinheiten erforderlich macht.

Diese Problem tritt z.B. auch dann auf, wenn verzweigte Einrichtungen zur Verteilung elektrischer Energie oder dergleichen mit Hilfe einer Fernwirkeinrichtung überwacht werden sollen.

Aufgabe der Erfindung ist es, ein Verfahren zur Adressierung von Prozessoreinheiten und eine Schaltungsanordnung zur Durchführung des Verfahrens anzugeben, die es gestatten, die Prozessoreinheiten selbstättig zu adressieren. Insbesondere soll es dabei möglich sein, Geräte mit Prozessoreinheiten für eine In-Betrieb-Überwachung von Nachrichten-, vorzugsweise Digitalsignal-Übertragungsstrecken selbsttätig zu adressieren.

Eine Erkenntnis im Rahmen der Erfindung besteht darin, daß die gewünschte selbsttätige Adressierung gelingt, wenn in einer Adressierungsphase jede zu adressierende Prozessoreinheit mit einer individuellen Adresse versehen wird, und eine Ermittlung des Netzaufbaues und/oder der Verteilung der Adressen auf die über das Telegrammübertragungsnetz miteinander verbundenen Prozessoreinheiten möglich ist.

Ausgehend von dieser Erkenntnis sieht das erfindungsgemäße Verfahren zur Lösung der gestellten Aufgabe die im kennzeichnenden Teil des Patentanspruchs 1 angegebenen Verfahrensschritte vor.

Dabei wird mit jedem Adressenvorschlag den zu adressierenden, d.h. jeweils mit einer Adresse zu versehenden Prozessoreinheiten eine Adresse angeboten. Die Verfahrensschritte zielen darauf ab, daß die angebotene Adresse in vorgegebener Weise von einer bestimmten Prozessoreinheit angenommen wird.

Das erfindungsgemäße Verfahren gestattet es in vorteilhafter Weise, Prozessoreinheiten, die über ein stern- bzw. baumförmiges Telegrammübertragungsnetz miteinander verbunden sind, selbsttätig auf verschiedene Adressen einzustellen. Insbesondere werden daher Fehler, die beim manuellen Voreinstellen vorkommen können, sicher vermieden. Wird das Verfahren in einer Einrichtung zur In-Betrieb-Überwachung nach dem Aufrufverfahren angewendet, das die Möglichkeit einer zentralen Überwachung von Digitalsignalübertragungsnetzen mit Linien-, Abzweig- oder Sternstruktur bietet, so ist die ermöglichte Selbstadressierung des gesamten Netzes, die eine manuelle Voreinstellung von Adressen entbehrlich macht, von besonderem Vorteil.

Bei dem erfindungsgemäßen Verfahren können die Endemeldungen, die die Prozessoreinheiten bei Empfang einer Endemeldung selbst abgeben, von der betreffenden Prozessoreinheit selbst erzeugt oder von dieser nur weitergegeben werden. Bei diesem Verfahren wird den Prozessoreinheiten in eindeutiger Weise eine bestimmte Adresse zugeteilt. Bei bekanntem Aufbau des Telegrammübertragungsnetzes kann daher für jede Prozessoreinheit die aus dem angewandten Adressierungsverfahren resultierende Adresse angegeben werden.

In Verbindung mit den Verfahrensschritten nach Anspruch 2 ergibt sich jedoch der besondere Vorteil, daß der Aufbau des Telegrammübertragungsnetzes und vor allem Änderungen desselben nicht manuell in die Auswertevorrichtung eingegeben zu werden brauchen, um die Adressenverteilung ermitteln zu können. Dieses Verfahren gestattet es vielmehr, sowohl den Aufbau des Telegrammübertragungsnetzes als auch die verfahrensgemäß erfolgte Zuordnung der Adressen zu den Prozessoreinheiten selbsttätig zu ermitteln.

Die Ergänzung von Identifikationstelegrammen durch Adressen von Prozessoreinheiten kann dadurch erfolgen, daß eine Adresse als solche oder zusammen mit weiteren Informationen in das Identifikationstelegramm eingefügt oder an dasselbe angefügt wird. Z.B. kann an das Identifikationstelegramm jeweils ein weiteres Identifikationstelegramm angehängt werden, so daß die Auswertevorrichtung die Adressenfolge als Folge von Identifikationstelegrammen empfängt. Die Identifikationstelegramme liefern der Auswertevorrichtung eine Folge von Adressen. Diese Folgen von Adressen entsprechen Reihen aufeinanderfolgender Prozessoreinheiten. Durch Überlagerung dieser Reihen von Prozessoreinheiten ergibt sich die Konfiguration des Telegrammübertragungsnetzes, und zwar deshalb, weil die Identifikationstelegramme jeweils von Programmeinheit zu Programmeinheit weitergegeben werden. Die Adressiervorrichtung kann, sobald die Auswertevorrichtung aus den bereits empfangenen Identifikationstelegrammen die Anordnung der Prozessoreinheiten zu ermitteln vermag, die Prozessoreinheiten veranlassen, keine weiteren Identifikationstelegramme auszusenden. Andererseits können in der Identifikationsphase alle Prozessoreinheiten eine eigene Folge von Adressen auslösen, so daß die der Auswertevorrichtung angebotenen Information gegebenenfalls mit einer Redundanz versehen ist.

Das in Anspruch 2 angegebene Verfahren hat den Vorteil, daß für die Zuordnung der Adressen zu den einzelnen Prozessoreinheiten die Struktur des Telegrammübertragungsnetzes nicht bekannt zu sein braucht. In vorteilhafter Weise kann sowohl die Netzstruktur als auch die Adressenverteilung selbsttätig ermittelt werden.

Vorteilhafte Weiterbildungen der Erfindung gehen aus den Ansprüchen 3 - 6 hervor. Anspruch 7 ist auf eine Überwachungsanordnung zur Durchführung des Verfahrens nach einem der Ansprüche 1 - 6 grichtet. Die Ansprüche 8 und 9 befassen sich mit Weiterbildungen der Überwachungsanordnung nach Anspruch 7.

Die Erfindung wird anhand der in den Figuren dargestellten Ausführungsbeispiele für Überwachungsanordnungen zur Durchführung des Verfahrens näher erläutert.

Es zeigen
- Fig. 1: einen Digitalsignal-Grundleitungsabschnitt mit Ortungsmodul und Personalcomputer,
- Fig. 2: über ein verzweigtes Telegrammübertragungsnetz mit einem Ortungsmodul verbundene Prozessoreinheiten eines Überwachungsbereiches und
- Fig. 3: eine Stromlauf einer Prozessoreinheit.

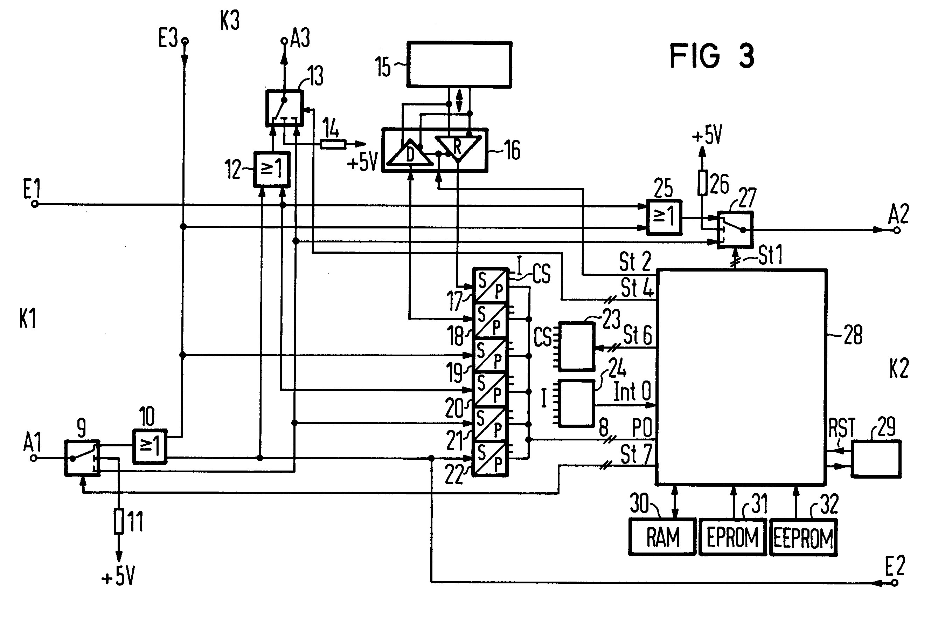

Die in Figur 3 gezeigte Prozessoreinheit wird durch einen Mikroprozessor 28 gesteuert. Sie hat zwei Anschlüsse K1 und K2 mit je zwei unindirektionalen Schnittstellen zur Ein- und Auskopplung von Überwachungsdaten in den dem Nutzsignal überlagerten Telemetrie-Kanal und zusätzlich den Anschluß K3 zur Übertragung von Überwachungsdaten zwischen mehreren Leitungsabschnitten.

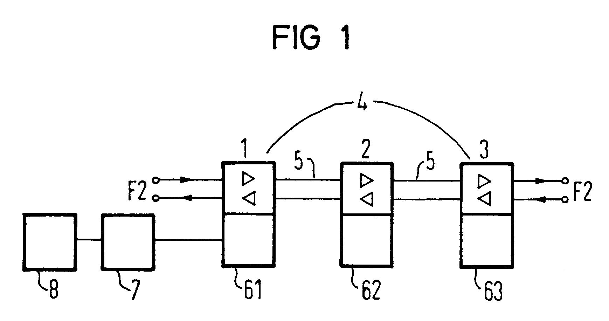

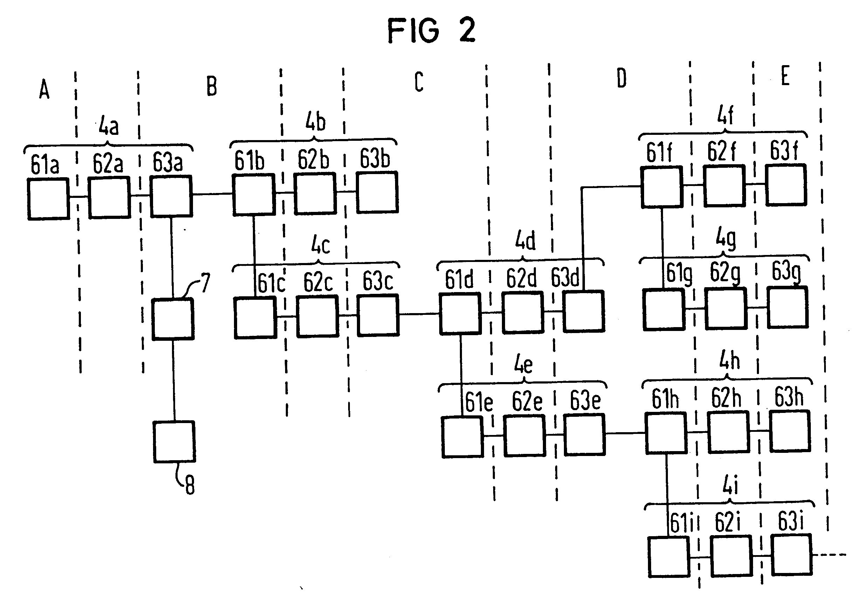

Figur 2 zeigt ein Telegrammübertragungsnetz, das eine Vielzahl von Prozessoreinheiten 61a ... 63i mit dem Ortungsmodul 7 und dem Personalcomputer 8 verbindet. Die Prozessoreinheiten sind insbesondere in der in Figur 1 gezeigten Weise in Leitungsendgeräten oder Zwischengeneratoren enthalten, können jedoch andererseits Unterstationen einer Fernwirkeinrichtung sein, die z. B. Überwachung und/oder Steuerung von Einrichtungen zur Verteilung elektrischer Energie oder dergleichen sein.

Das Telegrammübertragungsnetz hat die Struktur der Digitalsignal-Übertragungsanlage mit den Übertragungsabschnitten 4a bis 4i. Jeder dieser Übertragungsabschnitte 4a bis 4i ist wie der in Figur 1 gezeigte Leitungsabschnitt 4 aufgebaut, der zwei Leitungsendgeräte und einen Zwischenregenerator mit Prozessoreinheiten 61 ... 63 enthält. Diesen Bezugszeichen 61 bis 63 ist jeweils entsprechend dem betreffenden Übertragungsabschnitt 4a ... 4i einer der Buchstaben a bis i angefügt.

Als Verbindung zwischen den Prozessoreinheiten dient jeweils innerhalb eines Übertragungsabschnittes ein systemeigener Dienstkanal. Zur Verbindung von Leitungsendgeräten am selben Ort B, C, bzw. D kann jeweils ein vierdrähtiger Datenübertragungskanal für Vollduplex-Betrieb dienen. Gegebenenfalls können an dessen Stelle auch bidirektionale Datenkanäle für Halbduplex-Betrieb Verwendung finden.

Die an ein und demselben Ort befindlichen Prozessoreinheiten sind nicht an einen gemeinsamen Bus angeschlossen, sondern jeweils in Kaskade geschaltet. Dies gilt am Ort B für die Prozessoreinheiten 63a, 61b und 61c, am Ort C für die Prozessoreinheiten 63c, 61d und 61e, und am Ort D für die Prozessoreinheiten 63d, 61f und 61g einerseits und die Prozessoreinheiten 63e, 61h und 61i andererseits.

Auf die gezeigte Weise können verzweigte Telegrammübertragungsnetze gebildet werden, wobei weitere Kaskadenschaltungen von Prozessoreinheiten z. B. an den Orten A und E oder in Verbindung mit Prozessoreinheiten 62a ... 62i gebildet werden können, die in Zwischenregeneratoren der Übertragungsabschnitte 4a ... 4i enthalten sind.

Leitungsendgeräte 1 und 3, gegebenenfalls ein oder mehrere Zwischenregeneratoren 2 und der Lichtwellenleiter 5 sind die Grundelemente der in Figur 1 gezeigten Digitalsignal-Übertragungsstrecke. Die Funktionsfähigkeit und Übertragungeigenschaften dieser Übertragungsstrecke werden mit Hilfe von Geräten der In-Betriebüberwachung gebildet durch den Ortungsmodul 7, den Personalcomputer 8 und die In-Betrieb-Überwachungs-Prozessoreinheit 61, 62 bzw. 63 im folgenden als Prozessoreinheit bezeichnet, kontrolliert.

Die kleinste Einheit einer Digitalsignal-Übertragungsstrecke ist ein Digitalsignal-Grundleitungsabschnitt 4, im folgenden als Leitungsabschnitt 4 bezeichnet. Dieser Leitungsabschnitt besteht aus den beiden Leitungsendgeräten 1 und 3 und bei Bedarf in die Strecke eingefügten Zwischenregeneratoren 2.

In jedes Leitungsendgerät 1 bzw. 3 und in jeden Zwischenregenerator 2 ist eine Prozessoreinheit eingesetzt, die über einen internen Bus die Überwachungsdaten von dem zu überwachenden Hauptsystem erhält.

Die Überwachungsdaten werden über ein Telegrammübertragungsnetz zum Ortungsmodul übertragen. Dieses Telegrammübertragungsnetz kann je nach Struktur des Hauptnetzes im Ortungsbereich und je nach Anforderungen insbesondere aus einer Linie mit einem oder mehreren in Kaskade geschalteten Leitungsabschnitten 4, einem Netz mit parallelen Linien oder einem mit Abzweigungen versehenen Sternnetz bestehen.

Gegebenenfalls können über den Anschluß K3 Überwachungsdaten zwischen einem Zwischenregenerator und einem abzweigenden Leitungsabschnitt ausgetauscht werden.

Innerhalb eines Leitungsabschnittes 4 werden die Überwachungsdaten der Leitungsendgeräte 1, 3 und der Zwischenregeneratoren 2 von einer Prozessoreinheit zur nächsten Prozessoreinheit z. B. von der Prozessoreinheit 61 zur Prozessoreinheit 62 bzw. umgekehrt jeweils über einen der Anschlüsse K1 und K2 aus- bzw. eingekoppelt.

Innerhalb einer Linie werden die Überwachungsdaten von Leitungsendgerät 1 bzw. 3 zu Leitungsendgerät 3 bzw. 1 gegebenenfalls von einem Leitungsabschnitt zum nächsten Leitungsabschnitt, z. B. vom Leitungsabschnitt 4a zum Leitungsabschnitt 4b oder vom Leitungsabschnitt 4b zum Leitungsabschnitt 4a jeweils über den Anschluß K3 der betreffenden Prozessoreinheit nach Figur 3 übertragen.

Bei einem Abzweig von Leitungsabschnitten 4c, 4e, 4g, 4i werden die Überwachungsdaten zwischen den in Kaskade geschalteten Leitungsendgeräten 61b, 61c, 61d, 61e, 61f, 61g bzw. 61h 61i oder von einem Zwischenregenerator 62h zum Leitungsendgerät 61i über den Anschluß K3 der Prozessoreinheiten übertragen.

Am Anschluß K3 des Leitungsendgerätes 63a ist als Vorrichtung zur Ablaufsteuerung das Ortungsmodul 7 und der Personalcomputer 8 angeschlossen. Die Vorrichtung zur Ablaufsteuerung ruft die einzelnen Prozessoreinheiten nacheinander per Aufruftelegramm mit ihren Adressen auf, erhält deren Überwachungsdaten per Antworttelegramm und wertet diese aus. Gegebenenfalls kann als Vorrichtung zur Ablaufsteuerung ein Ortungsmodul 7 oder ein Personalcomputer 8 allein Verwendung finden.

Die Adressen der Prozessoreinheiten setzen sich zweckmäßigerweise aus zwei Byte zusammen und zwar aus einem Adressbyte für die Nummer oder Teiladresse a ... i des Leitungsabschnittes 4a ... 4i in dem die Prozessoreinheit eingesetzt ist und aus einem Adressbyte bzw. Teiladresse für die Nummer 1 ... 3 der Prozessoreinheit in dem Leitungsabschnitt 4a ... 4i.

In einem Aufruftelegramm mit dem Übertragungsprotokoll z. B. nach der Norm IEC TC57, enthält das erste Adressenbyte im Adreßfeld die Nummer bzw. Teiladresse a ... i des Leitungsabschnittes 4a ... 4i und das zweite Adreßbyte im Adreßfeld die Nummer bzw. Teiladresse 1 ... 3 der aufzurufenden Prozessoreinheit innerhalb dieses Leitungsabschnittes 4a ... 4i.

Die Prozessoreinheit nach Figur 3 mit einem Steuerungstelegramm kann zwischen zwei Moden für die Übertragung der Telegramme innerhalb der Baugruppe umgeschaltet werden.

Der eine Modus ist der Normalbetrieb. In diesem Betriebsmodus werden alle an den Schnittstellen der Prozessoreinheit ankommenden Telegramme über eine Logikschaltung sofort an die nächsten Streckengeräte weitergegeben und parallel vom Mikroprozessor 28 auf ihren Inhalt hin überprüft. Frühestens nach Durchlauf eines Zeichens kann der Mikroprozessor 28 aktiv eingreifen und z. B. den Datenfluß zu bestimmten Ausgängen K1, K2, K3 sperren.

Der andere Modus ist der Speicherbetrieb. In diesem Betriebsmodus werden alle an den Schnittstellen der Prozessoreinheit ankommenden Telegramme erst vom Mikroprozessor 28 auf ihren Inhalt hin überprüft, bevor sie an die nächsten Streckengeräte weitergegeben werden. In diesem Fall bestimmt der Mikroprozessor 28 schon beim ersten Zeichen, ob und wohin die ankommenden Daten gesendet werden.

Durch diese zwei Moden kann - je nach Anwendungsfall - entweder ein schneller Durchlauf der Telegramme durch das Leitungsendgerät und den Zwischenregenerator oder bei langsameren Durchlauf eine mikroprozessorgesteuerte Weitergabe der Telegramme über bestimmte Ausgänge K1, K2, K3 erreicht werden.

Die in den Leitungsendgeräten 61a ... 61i und 63a ... 63i sowie die in den Zwischenregeneratoren 62a ... 62i enthaltenen Prozessoreinheiten lassen sich dadurch selbsttätig adressieren, daß eine Adressiervorrichtung in einer Adressierungsphase an die Prozessoreinheiten Adressiertelegramme mit je einem Adressenvorschlag aussendet und daß die Prozessoreinheiten jeweils durch Annahme eines der Adressenvorschläge mit einer individuellen Adresse versehen werden.

Bei bekanntem Aufbau des Telegrammübertragungsnetzes kann für jede Prozessoreinheit die aus dem angewandten Adressierungsverfahren resultierende Adresse angegeben werden. Andererseits kann in einer daran anschließenden Identifikationsphase, die sich an die Adressierungsphase anschließt, wenigstens eine Teilmenge der Prozessoreinheiten mit Hilfe eines die Adresse der jeweiligen Prozessoreinheit enthaltenden Steuerungstelegrammes dazu veranlaßt werden, an dem Ein-Ausgang, über den sie das Steuerungstelegramm empfing, ein die eigene Adresse enthaltendes Identifikationstelegramm auszusenden, wobei die Prozessoreinheiten empfangene Identifikationstelegramme jeweils durch ihre eigene Adresse ergänzen und das ergänzte Identifikationstelegramm an dem Ein-Ausgang aussenden, über den sie selbst das Steuerungstelegramm empfingen, und wobei die Adressiervorrichtung mit einer Auswertevorrichtung versehen ist, mit deren Hilfe aus den empfangenen Identifikationstelegrammen die Anordnung der Prozessoreinheiten im Telegrammübertragungsnetz ermittelt wird.

Das Verfahren beginnt mit einer Vorbereitungsphase.

Der Start der automatischen Adressenzuweisung für alle Prozessoreinheiten 61a ... 63i eines Ortungsbereichs erfolgt nach Streckenaufbau entweder am Ortungsmodul 7 durch Drücken einer Taste oder an einem Personalcomputer 8 durch Eingabe über die Tastatur.

Alle Prozessoreinheiten sind nach dem Einschalten der Strecke im Normalbetrieb.

Der Personalcomputer 8 sendet ein Steuerungstelegramm mit dem Befehl "Übergang in den Speicherbetrieb" an die Prozessoreinheiten.

Die Prozessoreinheiten speichern intern, an welchem Empfangseingang ihrer Schnittstellen K1, K2, K3 sie das Steuerungstelegramm empfangen haben. Dann gehen sie in den Speicherbetrieb und senden ein Erkennungstelegramm über diese Schnittstelle zurück an die daran angeschlossene Prozessoreinheit oder den Personalcomputer 8.

Die Prozessoreinheiten speichern intern, an welchem Empfangseingang ihrer Schnittstellen K1 ... K3 sie ein Erkennungstelegramm empfangen haben. Sie geben empfangene Erkennungstelegramme nicht an die nächsten Prozessoreinheiten und auch nicht an den Personalcomputer 8 weiter.

An die Vorbereitungsphase schließt sich die Adressierungsphase an.

Von der ihm am nächsten gelegenen Prozessoreinheit empfing auch der Personalcomputer 8 ein Erkennungstelegramm. Er sendet nun ein Adressiertelegramm mit einem ersten Adressenvorschlag z. B. 001 Dez. aus.

Die dem Personalcomputer 8 am nächsten gelegene Prozessoreinheit empfängt das Adressiertelegramm mit dem Adressenvorschlag über eine ihrer Schnittstellen K1 ... K3. Da diese Prozessoreinheit noch keine eigene Adresse eingespeichert hat, sendet sie das Adressiertelegramm nicht weiter, sondern übernimmt den Adressenvorschlag in ihren Adressenspeicher. Dann sendet sie ein Quittungstelegramm, das die eingespeicherte Adresse enthält, zurück an den Personalcomputer 8.
Erhält der Personalcomputer 8 dieses Quittungstelegramm, so sendet er ein weiteres Adressiertelegramm mit einem neuem Adressenvorschlag z. B. 002 Dez. aus.

Da jetzt die dem Personalcomputer 8 am nächsten gelegene Prozessoreinheit schon eine Adresse eingespeichert hat, gibt sie das neue Adressiertelegramm an die nächste Prozessoreinheit weiter. Diese übernimmt nach Empfang des Adressiertelegramms den Adressenvorschlag in ihren Adressenspeicher und sendet ein Quittungstelegramm, das die eingespeicherte Adresse enthält, an den Personalcomputer 8 zurück.
Dabei sind folgende Regeln vorgesehen:
Adressiertelegramme werden von einer der Prozessoreinheiten 61a ... 63i weitergegeben, wenn diese Einheit schon adressiert ist. Die Weitergabe erfolgt nur über eine der Schnittstellen, aus der die Prozessoreinheit ein Erkennungstelegramm erhalten hatte. Die Auswahl der Schnittstelle geschieht nach einer vorher festgelegten Reihenfolge z. B. zuerst K1, dann K2 und dann K3. Nach Auswahl der Schnittstelle sendet die Prozessoreinheit alle weiteren Telegramme über diese Schnittstelle weiter, bis sie ein Quittungstelegramm mit dem Befehl erhält "Schnittstelle wechseln". Quittungstelegramme werden von einer der Prozessoreinheiten nur über die Schnittstelle ausgesendet oder weitergegeben, aus der sie das Steuerungstelegramm erhalten hat.

Der bisher beschriebene Ablauf wird solange fortgesetzt, bis ein Adressiertelegramm eine Prozessoreinheit erreicht, an der keine nachgeschaltete Prozessoreinheit angeschlossen ist, und die daher an keinem ihrer Anschlüsse ein Erkennungstelegramm erhalten hat. Diese Prozessoreinheit übernimmt den Adressenvorschlag in ihren Adressenspeicher und sendet ein Quittungstelegramm mit dem Befehl "Schnittstelle wechseln" in Richtung Personalcomputer 8. Die nächste Prozessoreinheit in Richtung Personalcomputer 8 prüft vor Weitergabe des Quittungstelegramms, ob bei ihr ein Abzweig beschaltet ist. Dies erkennt sie daran, daß sie an einer weiteren Schnittstelle ein Erkennungstelegramm empfangen hatte.

Ist dies der Fall, dann wird der Befehl "Schnittstelle wechseln" gespeichert und das Quittungstelegramm ohne diesen Befehl in Richtung Personalcomputer 8 weitergesandt. Bei Empfang des nächsten Adressiertelegramms wird der gespeicherte Befehl zur Umschaltung der Schnittstelle ausgeführt und alle weiteren Adressiertelegramme über die genannte weitere Schnittstelle übertragen. Die über die genannte Schnittstelle zurückkommenden Quittungstelegramme werden in Richtung Personalcomputer 8 weitergeleitet.

Wenn alle Prozessoreinheiten 61a ... 63i adressiert sind, die an der genannten Schnittstelle angeschlossen sind, dann wird von der letzten Prozessoreinheit 61a, 63f ... 63i ein Quittungstelegramm mit dem Befehl "Schnittstelle wechseln" zurückgesandt. Da aber die Prozessoreinheit sowohl im Leitungsendgerät wie im Zwischenregenerator jeweils nur drei Schnittstellen hat, ist eine weitere Umschaltung nicht mehr möglich. Der Befehl wird daher nicht ausgeführt und das Quittungstelegramm mit dem Befehl wird unverändert in Richtung Personalcomputer 8 weitergegeben.

Ist bei der Prozessoreinheit der Abzweig nicht beschaltet, dann wird ebenfalls das Quittungstelegramm mit dem Befehl "Schnittstelle wechseln" unverändert in Richtung Personalcomputer 8 weitergegeben.

Der bisher beschriebene Vorgang wiederholt sich solange, bis alle Prozessoreinheiten eine eigene Adresse in ihrem Adressenspeicher haben.
Dies erkennt der Personalcomputer 8 daran, daß er ein Quittungstelegramm mit dem Befehl "Schnittstelle wechseln" erhält. Damit ist die Adressierungsphase abgeschlossen.

An die Adressierungsphase schließt sich die Identifikationsphase an. Der Personalcomputer 8 ruft mit einem Identifikationstelegramm nacheinander alle Prozessoreinheiten 61a ... 63i mit ihrer Adresse auf. Die aufgerufenen Prozessoreinheiten senden ein Antworttelegramm mit ihrer Adresse nur über die Schnittstelle aus, über die sie das Identifikationstelegramm empfangen haben. Jede Prozessoreinheit, die ein solches Antworttelegramm auf ihrem Weg zum Personalcomputer 8 empfängt, hängt ihre eigene Adresse im Antworttelegramm an und sendet dieses auch nur über die Schnittstelle weiter, über die sie das Identifikationstelegramm empfangen hat.

Mit Hilfe eines Auswerteprogramms für die Antworttelegramme ermittelt der Personalcomputer 8 die Struktur des Netzes und stellt sie am Bildschirm dar.

Bei Bedarf kann der Personalcomputer 8 jeder Prozessoreinheit per Telegrammbefehl eine beliebige neue Adressenkombination (z. B. Leitungsabschnitt-Adresse und Prozessoreinheit-Adresse) zuordnen.

Für den Aufruf- bzw. Pollingbetrieb können die Prozessoreinheiten 61a ... 63i durch ein Steuerungstelegramm mit dem Befehl "Übergang in den Normalbetrieb" in den Modus Normalbetrieb umgeschaltet werden.

Eine Ausführungsform der Prozessoreinheit mit drei Vierdraht-Schnittstellen zeigt Figur 3. Auch diese Baugruppe kann sowohl im Leitungsendgerät als auch im Zwischenregenerator eingesetzt werden. Sie hat zur Übertragung von Telegrammen einen Eingang und einen Ausgang A1 zum Anschluß eines ersten vierdrähtigen Datenkanals K1, einen Eingang E2 und einen Ausgang A2 zum Anschluß eines zweiten vierdrähtigen Datenkanals K2 und einen Eingang E3 und einen Ausgang A3 zum Anschluß eines dritten vierdrähtigen Datenkanals K3.

Jeder der drei Ausgänge A1, A2, A3 läßt sich jeweils über einen durch den Mikroprozessor 28 steuerbaren Umschalter 9, 27, 13 wahlweise an den Ausgang eines ODER-Gliedes 10, 25, 12 an einen Pull-up- bzw. Ziehwiderstand 11, 26, 14 oder an den Ausgang eines Parallel-Serien-Wandlers 21 anzuschließen. Der Mikroprozessor 28 steuert den Umschalter 9 mit der 2-adrigen Steuerleitung ST7, den Umschalter 27 mit der 2-adrigen Steuerleitung St1 und den Umschalter 13 mit der 2-adrigen Steuerleitung St4.

Die Ausgänge der ODER-Glieder 10, 25, 12 führen über die Umschalter 9, 27, 13 jeweils an einen Ausgang A1, A2 oder A3 der Vierdraht-Schnittstellen. Die Eingänge der ODER-Glieder 10, 25, 12 sind jeweils mit den Eingängen E1, E2 oder E3 der anderen zwei Vierdraht-Schnittstellen verbunden.

Die Eingänge E1, E2, E3 sind jeweils mit einem Eingang eines Serien-Parallel-Wandlers 20, 22, 19 verbunden. Die Ausgänge der Serien-Parallel-Wandler sind an einem 8-Bit-Parallel-Bus zusammengefaßt. Ebenfalls an den Bus ist der Signalsammler 15 über den Interface-Baustein 16 mit dem Serien-Parallel-Wandler 17 und dem Parallel-Serien-Wandler 18 angekoppelt.

Die Serien-Parallel-Wandler 17, 19, 20, 22 sowie die Parallel-Serien-Wandler 18, 21 sind in UART-Bausteinen enthalten und steuern den Mikroprozessor 28 über den an den Interrupt-Anschluß Int O angeschlossenen Interrupt-Baustein 24. Sie sind über den 8-Bit-Parallel-Bus an den Port PO des Mikroprozessors 28 angeschlossen und werden von dem Mikroprozessor 28 über den Chip-Select-Baustein 23 gesteuert.

An den Mikroprozessor 28 sind außerdem noch das als Datenspeicher dienende RAM 30, das als Programmspeicher dienende EPROM 31, das als nicht flüchtiger Datenspeicher dienende EEPROM 32 und der Baustein 29 zur Eigenüberwachung angeschlossen.

Im Normalbetrieb werden die Telegramme vom Dateneingang E1 über das ODER-Glied 25 und den Schalter 27 direkt zum Ausgang A2 und über das ODER-Glied 12 und den Schalter 13 direkt zum Ausgang A3 weitergegeben. Gleichfalls gelangen die Telegramme vom Dateneingang E3 über das ODER-Glied 10 und den Schalter 9 direkt zum Ausgang A1 und über das ODER-Glied 25 und den Schalter 27 direkt zum Ausgang A2. In der Rückrichtung gelangen die Telegramme vom Eingang E2 über das ODER-Glied 10 und den Schalter 9 zum Ausgang A1 und über das ODER-Glied 12 und den Schalter 13 zum Ausgang A3.

Zusätzlich werden alle Daten von den Eingängen E1, E2, E3 dem Mikroprozessor 28 zur Verarbeitung übertragen. Daten, die am Eingang E1 ankommen, gelangen über den Serien-Parallel-Wandler 20, Daten vom Einang E2 über den Serien-Parallel-Wandler 22, und Daten vom Eingang E3 über den Serien-Parallel-Wandler 19, zum Mikroprozessor 28. Die Serien-Parallel-Wandler 19, 20, 22 nehmen die Daten byteweise auf und senden immer dann einen Interrupt-Impuls über den Interrupt-Baustein an den Mikroprozessor 28, wenn ein Byte vollständig eingelesen ist, dieses die Start-, Stop- und Parity-Bedingungen erfüllt und es über den 8-Bit-Parallel-Bus am Port PO vom Mikroprozessor 28 übernommen werden kann.

Im Normalbetrieb dürfen zur gleichen Zeit nur über einen der Eingänge E1, E2, E3 Daten übertragen werden, andernfalls werden diese in den ODER-Gliedern 10, 12, 25 überlagert und damit verfälscht.

Durch den Befehl "Übergang in den Speicherbetrieb" im Steuerungstelegramm des Personalcomputers 8 wird die Prozessoreinheit veranlaßt, in den Speicherbetrieb überzugehen. Das Steuerungstelegramm, mit dem Befehl "Übergang in den Speicherbetrieb" durchläuft sämtliche Prozessoreinheiten im Normalbetrieb. Parallel dazu verarbeitet der Mikroprozessor 28 in jeder Prozessoreinheit jeweils das Steuerungstelegramm und geht nach Auswertung in den Speicherbetrieb über.

Im Speicherbetrieb werden die Daten, die an den Eingängen E1, E2, E3 anstehen, dem Mikroprozessor 28 über die Serien-Parallel-Wandler 20, 22, 22 zur Verarbeitung zugeführt. Nach der Verarbeitung aktiviert der Mikroprozessor 28 je nach Telegrammart ein oder zwei von den Steuerleitungen St1, St4, St7. Dadurch gelangen die im Mikroprozessor 28 verarbeiteten Daten, die der Parallel-Serien-Wandler 21 abgibt über ein oder zwei von den Schaltern 13, 27, 9 an ein oder zwei von den Ausgängen K1, K2 und K3. Jeder Eingang E1, E2, E3 ist an einen eigenen Serien-Parallel Wandler 20, 22, 19 angeschaltet. Der Mikroprozessor 28 erkennt durch die Interrupt-Impulse, über welchen der Eingänge Daten eingespeist werden. Vom Mikroprozessor 28 werden die Steuerleitungen St1, St4, St7 so aktiviert, daß von den Ausgängen A1, A2, A3 mit Hilfe der Ziehwiderstände 11, 14, 26 über die Schalter 19, 27, 13 diejenigen auf High-Potential gelegt werden, über die nicht gesendet werden soll.

Der Signalsammler 15 liefert über den Interface-Baustein 16 die Überwachungsdaten des überwachten Zwischenregenerators oder des überwachten Leitungsendgerätes an den Mikroprozessor 28 und erhält gegebenenfalls die in einem Aufruftelegramm vom Ortungsmodul 7 enthaltenen Steuerinformationen zur Weitergabe an eine nicht dargestellte Signal-Sammeleinrichtung.

Bei einem Einsatz der Prozessoreinheit in einem Leitungsendgerät oder Zwischenregenerator mit Abzweig werden die Überwachungsdaten vom Prozessor 28 über den Parallel-Serien-Wandler 21 über die drei Umschalter 9, 27, 13 zu den drei Ausgängen A1, A2, A3 übertragen und über die drei Datenkanäle K1, K2, K3 ausgesendet.

## Patentansprüche

1. Verfahren zur Adressierung von Prozessoreinheiten (61a...63i) einer Einrichtung zur Überwachung und/oder Steuerung, bei der mit Adressen versehene Prozessoreinheiten (61a...63i) über ein Telegrammübertragungsnetz derart Informationen miteinander austauschen können, daß Abfragetelegramme und Antworttelegramme übertragen werden, wobei an knoten des Telegrammübertragungsnetzes befindliche Prozessoreinheiten (63a, 61b, 61d, 61f, 61h) jeweils drei Ein-Ausgänge (K1...K3) aufweisen, die jeweils an einen eigenen Übertragungsabschnitt (4a...4i) des Telegrammübertragungsnetzes angeschlossen sind,
**dadurch gekennzeichnet,**
daß in einer Vorbereitungsphase die Adressiereinheit (7, 8) zunächst ein Steuerungstelegramm an alle Prozessoreinheiten (61a...63i) aussendet, daß die Prozessoreinheiten (61a...63i) daraufhin an dem Ein-Ausgang (K1...K3), an dem sie das Steuerungstelegramm empfingen, ein Erkennungstelegramm aussenden, bei Empfang eines jeden Erkennungstelegrammes speichern, an welchem Ein-Ausgang (K1...K3) das Erkennungstelegramm empfangen wurde und empfangene Erkennungstelegramme nicht weitergeben, und daß in einer sich an die Vorbereitungsphase anschließenden Adressierungsphase eine Adressiervorrichtung an die Prozessoreinheiten (61a...61i) Adressiertelegramme mit je einem Adressenvorschlag aussendet und daß jede noch nicht mit einer Adresse versehene Prozessoreinheit (61a...63i) bei Empfang eines Adressiertelegrammes die im Adressiertelegramm vorgeschlagene Adresse als eigene Adresse abspeichert, das Adressiertelegramm nicht weitergibt und für den Fall, daß sie in der Vorbereitungsphase kein Erkennungstelegramm empfing, eine Endemeldung an dem Ein-Ausgang (K1...K3) aussendet, der das Adressiertelegramm empfing und daß jede bereits mit einer Adresse versehene Prozessoreinheit (61a...63i) an die Ein-Ausgänge (K1...K3), an denen sie ein Erkennungstelegramm empfing, in vorgegebener Folge jeweils so lange empfangene Adressiertelegramme weitergibt, bis sie an dem betreffenden Ein-Ausgang (K1...K3) eine Endemeldung empfängt und bei Empfang einer Endemeldung an dem in der vorgebenen Folge letzten Ein-Ausgang (K1...K3) selbst eine Endemeldung an dem Ein-Ausgang (K1...K3) abgibt, der die Adressiertelegramme empfing, daß eine Adressiervorrichtung in einer Adressierungsphase an die Prozessoreinheiten (61a...61i) Adressiertelegramme mit je einem Adressenvorschlag aussendet.

2. Verfahren nach Anspruch 1,
**dadurch gekennzeichnet,**
daß in einer daran anschließenden Identifikationsphase wenigstens eine Teilmenge der Prozessoreinheiten (61a...63i) mit Hilfe eines die Adresse der jeweiligen Prozessoreinheit (61a...63i) enthaltenden Steuerungstelegrammes dazu veranlaßt wird, an dem Ein-Ausgang (K1...K3), über den sie das Steuerungstelegramm empfing, ein die eigene Adresse enthaltendes Identifikationstelegramm auszusenden und daß die Prozessoreinheiten (61a...61i) empfangene Identifikationstelegramme jeweils durch ihre eigene Adresse ergänzen und das ergänzte Identifikationstelegramm an dem Ein-Ausgang (K1...K3) aussenden, über den sie selbst das Steuerungstelegramm empfingen, und daß die Adressiervorrichtung mit einer Auswertevorrichtung versehen ist, mit deren Hilfe aus den empfangenen Identifikationstelegrammen die Anordnung der Prozessoreinheiten (61a...63i) im Telegrammübertragungsnetz ermittelt wird.

3. Verfahren nach Anspruch 1 oder 2,
**dadurch gekennzeichnet,**
daß die Prozessoreinheiten (61a...63i) jeweils nach Übernahme eines Adressenvorschlages ein Quittungstelegramm an die Adressiereinhelt senden und daß die Adressiereinheit jeweils nach Empfang eines Quittungstelegrammes ein weiteres Adressiertelegramm mit einem neuen Adressenvorschlag abgibt.

4. Verfahren nach einem der Ansprüche 1 bis 3,
**dadurch gekennzeichnet,**
daß die Prozessoreinheiten (61a...63i) im Normalbetrieb ankommende Telegramme sofort und im Speicherbetrieb erst nach einer Überprüfung weitergeben und daß die Prozessoreinheiten (61a...63i) mit Hilfe von Steuerungstelegrammen von einer Betriebsart in die andere umsteuerbar sind und daß die Prozessoreinheiten (61a...63i) in der Zuordnungsphase und bei Aufrufbetrieb im Normalbetrieb und in der Identifikationsphase im Speicherbetrieb arbeiten.

5. Verfahren nach einem der Ansprüche 1 bis 4,
**dadurch gekennzeichnet,**
daß die Prozessoreinheiten (61a...63i) im Normalbetrieb ankommende Telegramme sofort und im Speicherbetrieb erst nach einer Überprüfung weitergeben und daß die Prozessoreinheiten (61a...63i) mit Hilfe von Steuerungstelegrammen von einer Betriebsart in die andere umsteuerbar sind und daß die Prozessoreinheiten (61a...63i) bei Aufrufbetrieb im Normalbetrieb und in der Zuordnungsphase und in der Identifikationsphase im Speicherbetrieb arbeiten.

6. Verfahren nach einem der Ansprüche 1 bis 5,
**dadurch gekennzeichnet,**
daß die Adressiereinheit Befehlstelegramme an die Prozessoreinheiten (61a...63i) aussendet, die die Prozessoreinheiten (61a...63i) veranlassen, jeweils die in der Adressierungsphase angenommene Adresse durch eine im Befehlstelegramm angegebene neue Adresse zu ersetzen.

7. Überwachungsanordnung zur Überwachung von Einrichtungen der Nachrichtenübertragungstechnik,
bei der mit Adressen versehene Prozessoreinheiten (61a...63i) über ein Telegrammübertragungsnetz derart Informationen miteinander austauschen können, daß Abfragetelegramme und Antworttelegramme übertragen werden, wobei an Knoten des Telegrammübertragungsnetzes befindliche Prozessoreinheiten (63a, 61b, 61d, 61f, 61h) jeweils drei Ein-Ausgänge (K1...K3) aufweisen, die jeweils an einen eigenen Übertragungsabschnitt (4a...4i) des Telegrammübertragungsnetzes angeschlossen sind,
zur Durchführung des Verfahrens nach einem der Ansprüche 1 bis 6,
**dadurch gekennzeichnet,**
daß an die jeweils einen Mikroprozessor (28) enthaltenden Prozessoreinheiten (61a...63i) jeweils ein Meldungsgeber und/oder ein Befehlsempfänger (15) einer End- (3a...3i) oder Zwischenstelle (2a...2i) der überwachten Nachrichtenübertragungseinrichtung angeschlossen ist und daß die Prozessoreinheiten (61a...63i) über das Telegrammübertragungsnetz mit einer Vorrichtung zur Ablaufsteuerung (7) verbunden sind, die die einzelnen Prozessoreinheiten (61a...63i) adressengesteuert aufruft und als Adressiereinheit (7, 8) in einer Vorbereitungsphase zunächst ein Steuerungstelegramm an alle Prozessoreinheiten (61a...63i) aussendet, und daß die Prozessoreinheiten (61a...63i) eine Vorrichtung zum Aussenden von Erkennungstelegrammen, eine Vorrichtung zum Speichern von zu empfangenen Erkennungstelegrammen gehörenden Ein-Ausgängen (K1...K3) enthalten, und daß die Adressiervorrichtung eine Vorrichtung zum Aussenden von Adressiervorschlägen und von Endemeldungen und zur Weitergabe von Adressiertelegrammen aufweist, und daß mittels der Prozessoreinheiten (61a...63i) in Adressiertelegrammen vorgeschlagene Adressen als eigene Adresse abspeicherbar sind.

8. Überwachungsanordnung nach Anspruch 7,
**dadurch gekennzeichnet,**
daß die Prozessoreinheiten (61a...63i) jeweils eine Logikschaltung (10, 12, 25) enthalten, mit deren Hilfe an einem Ein-Ausgang (K1...K3) ankommende Telegramme im Normalbetrieb an die Ausgänge (A1...A3) der weiteren Ein-Ausgänge (K1...K3) durchschaltbar sind und daß je Ein-Ausgang (K1...K3) ein dem Ausgang (A1...A3) vorgeschalteter, durch den Mikroprozessor (28) steuerbarer Umschalter (9, 13, 27) vorgesehen ist, der durch den Mikroprozessor (28) derart steuerbar ist, daß er den Ausgang (A1...A3) bei Normalbetrieb mit der Logikschaltung (10, 12, 25) und bei Speicherbetrieb mit dem Ausgang (A1...A3) eines an den Mikroprozessor (28) angeschlossenen Parallel-Serienwandlers (21) verbindet.

9. Überwachungsanordnung nach Anspruch 8,
**dadurch gekennzeichnet,**
daß die Prozessoreinheiten (61a...63i) jeweils drei Ein-Ausgänge (K1...K3) mit einer Schnittstelle zum Anschluß eines vierdrähtigen Datenkanals haben.

## Claims

1. Method for addressing processor units (61a...63i) of a device for monitoring and/or controlling, in which processor units (61a...63i) provided with addresses can exchange information with one another via a message transmission network in such a way that interrogation messages and reply messages are transmitted, processor units (63a, 61b, 61d, 61f, 61h) situated at nodes of the message transmission network having in each case three inputs/outputs (K1...K3) which are connected in each case to their own transmission section (4a...4i) of the message transmission network, characterized in that in a preparation phase the addressing unit (7, 8) first transmits a control message to all processor units (61a...63i), in that the processor units (61a...63i) thereupon transmit a detection message at the input/output (K1...K3) at which they received the control message, upon receiving every detection message store at which input/output (K1...K3) the detection message was received, and do not forward received detection messages, and in that in an addressing phase following the preparation phase an addressing device transmits addressing messages with one address proposal each to the processor units (61a...61i), and in that upon receiving an addressing message each processor unit (61a...63i) not yet provided with an address stores the address proposed in the addressing message as its own address, does not forward the addressing message and, in the case where it did not receive a detection message in the preparation phase, transmits an end message at the input/output (K1...K3) that received the addressing message, and in that each processor unit (61a...63i) already provided with an address forwards received addressing messages in predetermined sequence in each case at the inputs/outputs (K1...K3) at which it received a detection message until it receives an end message at the respective input/output (K1...K3), and upon receiving an end message at the last input/output (K1...K3) in the predetermined sequence, itself outputs an end message to the input/output (K1...K3) that received the addressing messages, and in that in an addressing phase an addressing device transmits addressing messages with one address proposal each to the processor units (61a...61i).

2. Method according to Claim 1, characterized in that in a following identification phase at least some of the processor units (61a...63i) are caused by means of a control message containing the address of the respective processor unit (61a...63i) to transmit an identification message containing their own address at the input/output (K1...K3) via which they received the control message, and in that the processor units (61a...61i) augment identification messages received by their own address in each case and transmit the augmented identification message to the input/output (K1..K3) via which they themselves received the control message, and in that the addressing device is provided with an evaluation device, with the aid of which the arrangement of the processor units (61a...63i) in the message transmission network is determined from the identification messages received.

3. Method according to Claim 1 or 2, characterized in that the processor units (61a...63i) send an acknowledgement message to the addressing unit after accepting an address proposal in each case, and in that the addressing unit outputs a further addressing message with a new address proposal after receiving an acknowledgement message in each case.

4. Method according to one of Claims 1 to 3, characterized in that in normal mode the processor units (61a...63i) forward incoming messages immediately and in storage mode forward them only after a check, and in that the processor units (61a...63i) can be switched over from one mode to the other by means of control messages, and in that the processor units (61a...63i) operate in normal mode in the assignment phase and during polling mode and operate in storage mode in the identification phase.

5. Method according to one of Claims 1 to 4, characterized in that in normal mode the processor units (61a...63i) forward incoming messages immediately and in storage mode forward them only after a check, and in that the processor units (61a...63i) can be switched over from one mode to the other by means of control messages, and in that the processor units (61a...63i) operate in normal mode during polling mode and operate in storage mode in the assignment phase and in the identification phase.

6. Method according to one of Claims 1 to 5, characterized in that the addressing unit transmits command messages to the processor units (61a...63i) which cause the processor units (61a...63i) to replace the address accepted in the addressing phase by a new address specified in the command message in each case.

7. Monitoring arrangement for monitoring telecommunications equipment, in which processor units (61a...63i) provided with addresses can exchange information with one another via a message transmission network in such a way that interrogation messages and reply messages are transmitted, processor units (63a, 61b, 61d, 61f, 61h) situated at nodes of the message transmission network having in each case three inputs/outputs (K1...K3) which are connected in each case to their own transmission section (4a...4i) of the message transmission network, for carrying out the method according to one of Claims 1 to 6, characterized in that in each case a signal generator and/or a command receiver (15) of a terminal (3a...3i) or intermediate station (2a...2i) of the monitored telecommunications equipment is connected to the processor units (61a...63i) containing a microprocessor (28) in each case, and in that the processor units (61a...63i) are connected via the message transmission network to a device for execution sequence control (7) which calls up the individual processor units (61a...63i) under address control and transmits as addressing unit (7, 8) first a control message to all processor units (61a...63i) in a preparation phase, and in that the processor units (61a...63i) contain a device for transmitting detection messages, a device for storing inputs/outputs (K1...K3) associated with detection messages to be received, and in that the addressing device has a device for transmitting addressing proposals and end messages and for forwarding addressing messages, and in that addresses proposed in addressing messages can be stored as their own address by means of the processor units (61a...63i).

8. Monitoring arrangement according to Claim 7, characterized in that the processor units (61a...63i) contain in each case a logic circuit (10, 12, 25), with the aid of which messages arriving at an input/output (K1...K3) can be connected through to the outputs (A1...A3) of the further inputs/outputs (K1...K3) in normal mode, and in that a changeover switch (9, 13, 27) which is connected upstream of the output (A1...A3) and can be controlled by the microprocessor (28) is provided for each input/output (K1...K3), which changeover switch can be controlled by the microprocessor (28) in such a way that it connects the output (A1...A3) to the logic circuit (10, 12, 25) during normal mode and to the output (A1...A3) of a parallel-serial converter (21) connected to the microprocessor (28) during storage mode.

9. Monitoring arrangement according to Claim 8, characterized in that the processor units (61a...63i) have in each case three inputs/outputs (K1...K3) with an interface for connecting a four-wire data channel.

## Revendications

1. Procédé pour l'adressage d'unités à processeur (61a...63i) d'un dispositif de contrôle et/ou de commande, dans lequel des unités à processeurs (61a...63i) pourvues d'adresses peuvent échanger entre elles des informations par l'intermédiaire d'un réseau de transmission de télégrammes de telle sorte que des télégrammes d'interrogation et des télégrammes de réponse sont transmis, et selon lequel des unités à processeur (63a, 61b, 61d, 61f, 61h), situées en des noeuds du réseau de transmission de télégrammes, possèdent respectivement trois entrées-sorties (K1...K3), qui sont connectées respectivement à une section propre de transmission (4a...4i) du réseau de transmission de télégrammes,
caractérisé par le fait
que lors d'une phase préparatoire, l'unité d'adressage (7,8) envoie tout d'abord un télégramme de commande à toutes les unités à processeur (61a...63i), qu'alors les unités à processeur (61a...63i) envoient un télégramme d'identification à l'entrée-sortie (K1...K3), au niveau de laquelle elles ont reçu le télégramme de commande, mémorisent, lors de la réception de chaque télégramme d'identification, à quelle entrée-sortie (K1...K3), le télégramme d'identification a été reçu, et ne retransmettent pas des télégrammes d'identification reçus et que pendant une phase d'adressage qui succède à la phase préparatoire, une unité d'adressage (7,8) envoie, aux unités à processeurs (61a...61i), des télégrammes d'adressage comportant chacun une proposition d'adresse et que chaque unité à processeur (61a...63i) non encore pourvue d'une adresse mémorise, lors de la réception d'un télégramme d'adressage, l'adresse proposée dans le télégramme d'adressage en tant qu'adresse propre, ne transmet pas le télégramme d'adressage et, dans le cas où elle n'a reçu aucun télégramme d'identification pendant la phase préparatoire, envoie une signalisation de fin à l'entrée-sortie (K1...K3), qui a reçu le télégramme d'adressage et que chaque unité à processeur (61a...63i), déjà pourvue d'une adresse, transmet selon une séquence prédéterminée, aux entrées-sortie (K1...K3), auxquelles elle a reçu un télégramme d'identification, des télégrammes d'adressage reçus et ce jusqu'à ce qu'elle reçoive une signalisation de fin au niveau de l'entrée-sortie (K1...K3) concernée, et, lors de la réception d'une signalisation de fin au niveau de la dernière entrée-sortie (K1...K3) dans la séquence prédéterminée, envoie automatiquement une signalisation de fin à l'entrée-sortie (K1...K3), qui a reçu les télégrammes d'adressage, et que pendant la phase d'adressage, un dispositif d'adressage envoie, aux unités à processeur (61a...61i), des télégrammes d'adressage comportant chacun une proposition d'adressage.

2. Procédé suivant la revendication 1, caractérisé par le fait que dans une phase d'identification suivante, au moins une partie des unités à processeur (61a...63i) est amenée, au moyen d'un télégramme de commande contenant l'adresse de l'unité à processeur respective (61a...63i), à émettre un télégramme d'identification contenant son adresse propre, au niveau d'une entrée-sortie (K1...K3), au moyen de laquelle cette unité a reçu le télégramme de commande, et que les unités à processeur (61a...63i) complètent respectivement par leur propre adresse, des télégrammes d'identification reçus et envoient le télégramme d'identification complété à l,entrée-sortie (K1...K3), par l'intermédiaire de laquelle elles ont elles-mêmes reçus le télégramme de commande, et que le dispositif d'adressage est pourvu d'un dispositif d'évaluation, à l'aide duquel la disposition des unités à processeur (61a...63i) est déterminée, dans le réseau de transmission de télégramme, à partir des télégrammes d'identification reçus.

3. Dispositif suivant la revendication 1 ou 2, caractérisé par le fait que respectivement après la réception d'une proposition d'adresse, les unités à processeur (61a...63i) envoient un télégramme d'accusé de réception à l'unité d'adressage et que l'unité d'adressage délivre, respectivement après la réception d'un télégramme d'accusé de réception, un autre télégramme d'adressage possédant une nouvelle proposition d'adresse.

4. Procédé suivant l'une des revendications 1 à 3, caractérisé par le fait que les unités à processeur (61a...63i) transmettent immédiatement des télégrammes qui arrivent, lors du fonctionnement normal, et les transmettent uniquement après un contrôle, dans le cas du fonctionnement avec mémorisation, et que la commande des unités à processeur (61a...63i) peut être commutée d'un type de fonctionnement sur l'autre à l'aide de télégrammes de commande et que les unités à processeur (61a...63i) travaillent dans la phase d'association et, dans le cas du fonctionnement avec appel, selon le fonctionnement normal et, dans la phase d'identification, selon le fonctionnement avec mémorisation.

5. Procédé suivant l'une des revendications 1 à 4, caractérisé par le fait que les unités à processeur (61a...63i) transmettent immédiatement des télégrammes qui arrivent, lors du fonctionnement normal, et les transmettent uniquement après un contrôle, dans le cas du fonctionnement avec mémorisation, et que la commande des unités à processeur (61a...63i) peut être commutée d'un type de fonctionnement sur l'autre à l'aide de télégrammes de commande et que les unités à processeur (61a...63i) travaillent dans la phase d'association et, dans le cas du fonctionnement avec appel, selon le fonctionnement normal et, dans la phase d'identification, selon le fonctionnement avec mémorisation.

6. Procédé suivant l'une des revendications 1 à 5, caractérisé par le fait que l'unité d'adressage envoie aux unités à processeur (61a...63i), des télégrammes d'instructions, qui amènent ces unités à processeur (61a...63i) à remplacer respectivement l'adresse prise pendant la phase d'adressage, par une nouvelle adresse indiquée dans le diagramme d'instruction.

7. Dispositif de contrôle servant à contrôler des dispositifs de la technique de transmission d'informations,
dans lequel des unités à processeur (61a...63i) pourvues d'adresses peuvent échanger entre elles des informations par l'intermédiaire d'un réseau de transmission de télégrammes de telle sorte que des télégrammes d'interrogation et des télégrammes de réponse sont transmis, des unités à processeur (63a, 61b, 61d, 61f, 61h), situées en des noeuds du réseau de transmission de télégrammes, comportant chacune trois entrées-sorties (K1...K3), qui sont connectées respectivement à une section propre de transmission (4a...4i) du réseau de transmission de télégrammes,
pour la mise en oeuvre du procédé selon l'une des revendications 1 à 6,
caractérisé par le fait
qu'aux unités à processeur (61a...63i) comportant respectivement un microprocesseur (28), est raccordé respectivement un transmetteur de signalisation et/ou un récepteur d'instructions (15) d'un poste terminal (3a...3i) ou d'un poste intermédiaire (2a...2i) du dispositif contrôlé de transmission d'informations, et que les unités à processeur (61a...63i) sont connectées, par l'intermédiaire du réseau de transmission de télégrammes, à un dispositif de commande d'exécution (7), qui appelle, d'une manière commandée par des adresses, les différentes unités à processeur (61a...63i) et, en tant qu'unité d'adressage (7,8), envoie tout d'abord, lors d'une phase préparatoire, un télégramme de commande à toutes les unités à processeur (61a...63i), et que les unités à processeur (61a...63i) contiennent un dispositif pour émettre des télégrammes d'identification, un dispositif pour mémoriser des entrées-sorties (K1 ... K3) associées à des télégrammes d'identification reçus, et que le dispositif d'adressage (7, 8) contient un dispositif pour émettre des propositions d'adresses et des signalisations de fin et pour retransmettre des télégrammes d'adressage, et qu'au moyen des unités à processeur (61a ... 63i) des adresses proposées peuvent être mémorisées dans des télégrammes d'adressage, en tant qu'adresse propre.

8. Dispositif de contrôle suivant la revendication 7, caractérisé par le fait que les unités à processeur (61a...63i) contiennent chacune un circuit logique (10, 12, 25), à l'aide duquel, lors du fonctionnement normal, des télégrammes, qui arrivent à une entrée-sortie (K1...K3), peuvent être transmis directement aux sorties des autres entrées-sorties (K1...K3), et que pour chaque entrée-sortie (K1...K3), il est prévu un commutateur (9, 13, 27), qui est branché en amont de la sortie et peut être commandé par le microprocesseur (28) de telle sorte que, lors du fonctionnement normal, il relie la sortie (A1...A3) au circuit logique (10,12,25) et que, dans le cas du fonctionnement avec mémorisation, il relie ladite sortie à la sortie (A1 ... A3) d'un convertisseur parallèle-série (21) raccordé au microprocesseur (28).

9. Dispositif de contrôle suivant la revendication 8, caractérisé par le fait que les unités à processeur (61a...63i) comportent chacun trois entrées-sorties (K1...K3) comportant une interface pour le raccordement d'un canal quadrifilaire de données.
